# EUROPEAN PATENT APPLICATION

(11) **EP 3 142 010 A2**
(43) Date of publication of application: **15.03.2017**
(21) Application number: 16153580.2
(22) Date of filing: 01.02.2016
(51) Int. Cl.: G06F 9/50, G06F 9/54, G09B 5/02

(54) **CLOUD BASED LEARNING**

(30) Priority: 03.09.2015 IN 3394MU2015
(71) Applicant: Tata Consultancy Services Limited, Maharashtra (IN)
(72) Inventor: VAITHEESWARAN, Ramanathan, 600097 Chennai, Tamil Nadu (IN)
(74) Representative: Goddar, Heinz J.

(57) **Abstract**

A system and a method for cloud-based learning are provided. The method includes facilitating a selection of at least one training module from a plurality of training modules at a computing device. The plurality of training modules are accessible from a plurality of remote servers communicably coupled to the computing device in a cloud environment. A virtual training lab including a first plurality of tasks is configured corresponding to the at least one training module. Execution of the first plurality of tasks associated with the at least one training lab is enabled. A metadata generated during the execution of the first plurality of tasks is tracked in real-time. The metadata is analyzed for determining a learning progress associated with a learning of the training module.

## Description

### CROSS-REFERENCE TO RELATED APPLICATIONS AND PRIORITY

The present application claims priority to Indian Patent Application No. 3394/MUM/2015, filed on September 3rd, 2015, the entirety of which is hereby incorporated by reference

### TECHNICAL FIELD

The present subject matter relates, in general, to cloud based learning and, in particular, to providing methods and systems for interacting with a cloud computing environment for training and assessment.

### BACKGROUND

Training is a pursuit of improving existing skills and upgrading level of knowledge so that a candidate undergoing training is better equipped to perform expected activities efficiently by owning responsibilities. Training can be provided for various purposes such as equipping the candidates for a job, an examination, and other such activities. Various modes of training can be adopted for enhancing skill set of candidates.

One of the most common mode of training is classroom training where the potential candidates are expected to attend lectures imparted by instructors. However, this mode of training has limitations since during such trainings it is assumed that the candidates attending the training are at same skill levels. However, it may happen that the candidates attending the training may be at different skill levels and should, therefore, be imparted training according to their respective skills. Training should be provided to each candidate in a manner so as to bridge the gap between individual's current skill-set and expected requirements such as job demands. Since training involves time, effort and money, it should be carefully designed for meeting the goals of training with ease.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

In view of the foregoing, various embodiments herein provide methods and systems for cloud-based learning. In an aspect, a computer implemented method for cloud-based learning is provided. The method includes facilitating, at a computing device, a selection of at least one training module from a plurality of training modules. The plurality of training modules are accessible from a plurality of remote servers communicably coupled to the computing device in a cloud environment. Further, the method includes configuring, at the computing device, a virtual training lab corresponding to the at least one training module upon selection of the at least one training module from the plurality of training modules. Furthermore, the method includes enabling, at the computing device, execution of a first plurality of tasks associated with the training lab. Moreover, the method includes tracking, in real-time, metadata generated during the execution of the first plurality of tasks at the computing device. The metadata associated with a task of the first plurality of tasks includes at least one of a time taken to complete the task, key-strokes entered and logical sequencing followed for executing the task. The metadata is analyzed to determine a learning progress associated with learning of the at least one training module.

In another aspect, computer-implemented system for cloud-based training is provided. The system includes at least one memory; and at least one processor, the at least one memory coupled to the at least one processor wherein the at least one processor is capable of executing programmed instructions stored in the at least one memory to facilitate a selection of at least one training module from a plurality of training modules at a computing device. The plurality of training modules are accessible from a plurality of remote servers communicably coupled to the computing device in a cloud environment. Further, the system is caused to configure, at the computing device, a virtual training lab corresponding to the at least one training module upon selection of the at least one training module from the plurality of training modules. Furthermore, the system is caused to enable, at the computing device, execution of a first plurality of tasks associated with the training lab. Moreover, the system is caused to track, in real-time, metadata generated during the execution of the first plurality of tasks at the computing device. The metadata associated with a task of the first plurality of tasks includes at least one of a time taken to complete the task, key-strokes entered and logical sequencing followed for executing the task. The metadata is analyzed to determine a learning progress associated with learning of the at least one training module.

In yet another aspect, a non-transitory computer-readable medium having embodied thereon a computer program for executing a method for cloud-based learning is provided. The method includes facilitating, at a computing device, a selection of at least one training module from a plurality of training modules. The plurality of training modules are accessible from a plurality of remote servers communicably coupled to the computing device in a cloud environment. Further, the method includes configuring, at the computing device, a virtual training lab corresponding to the at least one training module upon selection of the at least one training module from the plurality of training modules. Furthermore, the method includes enabling, at the computing device, execution of a first plurality of tasks associated with the training lab. Moreover, the method includes tracking, in real-time, metadata generated during the execution of the first plurality of tasks at the computing device. The metadata associated with a task of the first plurality of tasks includes at least one of a time taken to complete the task, key-strokes entered and logical sequencing followed for executing the task. The metadata is analyzed to determine a learning progress associated with learning of the at least one training module.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the drawings to reference like features and modules.
FIG. 1 illustrates an example cloud environment for cloud based learning, in accordance with an embodiment;
FIG. 2 illustrates a cloud environment for configuring virtual training labs, in accordance with an example embodiment;
FIG. 3 illustrates a system for cloud based learning, in accordance with an example embodiment;
FIG. 4A illustrates an example system architecture 400 for analysis of metadata associated with performing of tasks in cloud based environment, in accordance with an example embodiment;
FIG. 4B illustrates an example system architecture of metadata associated with performing of tasks, in accordance with an example embodiment;
FIG. 4C illustrates a report generated on a user interface for task scenarios, in accordance with an example embodiment;
FIGS. 5A-5E illustrate an example UI associated with learning in a cloud based environment, in accordance with an example embodiment; and
FIG. 6 is a flow diagram depicting an example method for learning in a cloud-based environment, in accordance with an example embodiment.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION

Unless specifically stated otherwise as apparent from the following discussions, it is to be appreciated that throughout the present disclosure, discussions utilizing terms such as "determining" or "generating" or "comparing" or the like, refer to the action and processes of a computer system, or similar electronic activity detection device, that manipulates and transforms data represented as physical (electronic) quantities within the computer system's registers and memories into other data similarly represented as physical quantities within the computer system memories or registers or other such information storage, transmission or display devices.

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The methods and systems are not limited to the specific embodiments described herein. In addition, the method and system can be practiced independently and separately from other modules and methods described herein. Each device element/module and method can be used in combination with other elements/modules and other methods.

Throughout the description and claims of this complete specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

For a firmware and/or software implementation, the methodologies can be implemented with modules (e.g., procedures, functions, and so on) that perform the functions described herein. Any machine readable medium tangibly embodying instructions can be used in implementing the methodologies described herein. For example, software codes and programs can be stored in a memory and executed by a processing unit.

In another firmware and/or software implementation, the functions may be stored as one or more instructions or code on a non-transitory computer-readable medium. Examples include computer-readable media encoded with a data structure and computer-readable media encoded with a computer program. The computer-readable media may take the form of an article of manufacturer. The computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blue-ray disc where disks usually reproduce data magnetically, while discs reproduce data optically with lasers. Combinations of the above should also be included within the scope of computer-readable media.

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

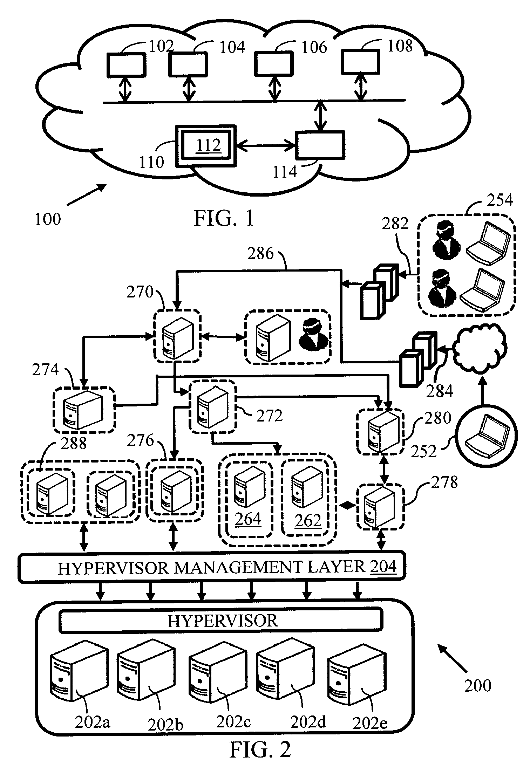

The manner, in which the system and method for cloud based learning shall be implemented, has been explained in details with respect to the FIGS. 1 through 6. While aspects of described methods and systems for cloud based training can be implemented in any number of different systems, utility environments, and/or configurations, the embodiments are described in the context of the following exemplary system(s).

The purpose of training is to bridge the gap between individual's current skill-set and expected requirements such as job demands, examination assessment, and so on. Since training involves time, effort and money, it should be carefully designed for meeting the goals of training with ease. However, it is observed that the candidates attending the training are sometimes at different skill levels and therefore imparting training to such candidates in the same training environment may not be an effective solution. Various embodiments disclosed herein provides methods and system for imparting training that enables self-paced learning for individual candidates, thereby achieving fast learning to learn more in less time. For instance, the disclosed system enables the trainees to undergo task-based sequential learning by enabling dynamic availability of requisite training content (anytime anywhere access) as per the trainee's requirement and dynamic assessment of the learning of the training content. The system is implemented in a cloud based environment to enable the dynamic availability of the requisite training content and dynamic assessment of the learning. An example of a cloud based environment is described further with reference to FIG. 1.

FIG. 1 illustrates example cloud environment 100 for cloud based learning, in accordance with an example embodiment. As used herein, the terms "cloud" or "cloud environment" or "cloud computing environment" may refer to various evolving arrangements, infrastructure, networks, and the like that are typically based upon the Internet. The terms may refer to any type of cloud, including client clouds, application clouds, platform clouds, infrastructure clouds, server clouds, and a combination thereof. In various embodiments, such arrangements may allow for use in training by the training providers, for assessment of candidate's learning of training content, for provisioning of software as a service (SaaS), various aspects of computing platforms as a service (PaaS), various network infrastructures as a service (IaaS) and so forth. Moreover, included in this term should be various types and business arrangements for products and services pertaining to the learning (training and assessment), including public clouds, community clouds, hybrid clouds, and private clouds. Any or all of these may be serviced by third party entities. However, in certain embodiments, private clouds or hybrid clouds may allow for access to training content among authorized users.

The cloud environment 100 includes a plurality of devices, for instance devices 102, 104, 106, 108, and 110. The computing resources of the plurality of distributed devices such as devices 102, 104, 106, and 108 may be pooled to serve multiple trainees, with different physical and virtual resources dynamically assigned and reassigned according to the demand. Examples of computing resources may include storage, processing, memory, network bandwidth, and virtual machines. The devices 102, 104, 106, 108 may include servers associated with one or more providers. For example, certain programs or software platforms may be accessed via a set of devices provided by the owner of the programs while other devices are provided by data storage companies. The devices 102, 104, 106, 108 may communicate via any suitable arrangement and protocol. In an example embodiment, the devices 102, 104, 106, 108 may communicate via a wired or a wireless link. In an embodiment, the communication amongst the devices 102, 104, 106, 108 any be enabled by a combination of Local Area Networks (LANs), Wide Area Networks (WANs), Internet Protocol (IP) networks, phone networks, Public Services Telephone Networks (PSTN), wireless networks, cellular networks, Wi-Fi networks, Bluetooth networks, cable networks, data buses, or the like, or any combination thereof.

In an embodiment, the devices 102, 104, 106, and 108 may communicate with one another to distribute resources, and such communication and management of distribution of resources may be controlled by a system 112, residing on one or more devices, for instance the device 110. In a cloud computing environment for conducting training, a high level of automation is required for provisioning of resources to multiple trainees. A key component of an automated cloud environment is a management server 114 through which all the resources including training modules, databases, source codes, configurations, and so on, are made available to the trainee devices for instance the devices 102, 104, 106, and 108. In an embodiment, the management server 114 may include a hypervisor management layer in the cloud environment 100. The management server 114 may further include directories, files and formats that specify virtual machines on which the programs may run, directories, files and formats that specify the configurations of the virtual machines, and interconnection of the virtual machines. Moreover, these directories, files, and formats may be in the form of source files, compiled files, or archive files. Such directories, files, and formats include, for example open virtualization format (OVF) files that package virtual machines. The OVF format provides a complete specification of the virtual machine. This includes the full list of required virtual disks and the required virtual hardware configuration, including CPU, memory, networking, and storage.

As noted, the cloud computing environment 100 may serve multiple users or clients with associated devices, e.g., devices 102-108. The cloud computing environment 100 may also be accessed by other types of clients, such as administrators. Accordingly, the cloud computing environment 100 may provide different types of services depending on the access level of the particular client. For instance, a trainee may have access to training data stored in various devices such as devices 102-108 while the administrator may have access to storage and data analysis services of the cloud environment. A detailed cloud environment for learning, and configuring virtual training labs in the cloud environment is described further with reference to FIG 2. The virtual training labs can be accessed by the trainees anywhere anytime, thereby resulting in faster learning to learn more in less time.

FIG. 2 illustrates a cloud environment 200 for configuring virtual training labs, in accordance with an example embodiment. The cloud environment 200 includes a plurality of servers, such as servers 202a, 202b, 202c, 202d, 202e. The servers 202a, 202b, 202c, 202d, 202e, hereinafter referred to as severs 202a-202e, constitutes a datacentre for provisioning of pools of compute, storage, and networking resources. The servers 202a-202e may be examples of the device 102-108 (FIG. 1).

Herein, the term 'virtual training lab' may refer to compute, storage, and networking resources that may be configured in the cloud computing environment for provisioning of training modules and assessment modules to the trainees. The storage may comprise one or more virtual disks. The virtual disks may include operating systems, drivers, and application software that run on the virtual machine. In an embodiment, the virtual training lab may be configured based on a template library that may be stored in a management server (for example the management server 114 of FIG. 1).

The cloud environment 200 includes a hypervisor management layer 204 that controls the provisioning of pools of compute, storage, and networking resources throughout the data centre. The hypervisor management layer may be embodied in the management server 114 (FIG. 1). In an embodiment, the hypervisor management layer 204 (hereinafter referred to as hypervisor 204) may control the pools of compute, storage, and networking resources. In an embodiment, the hypervisor 204 includes a template library that may store a plurality of templates with different specifications needed for each virtual training lab associated with each technology with multiple levels of training. In an embodiment, the plurality of training modules and the assessment modules are accessible from a plurality of remote servers (for example, devices 102, 104, 106, and 108 of FIG. 1) communicably coupled to the computing device in the cloud environment. In an embodiment, for controlling provisioning of pools of compute, storage, and networking resources, the hypervisor 204 includes components such as a primary computing engine, a storage system, a block storage component, networking capability component, dashboard component, identity services component, image services component, telemetry services component, orchestration component, and so on. For instance, the primary computing engine may be a "fabric controller," that can be used for deploying and managing large numbers of virtual machines and other instances to handle computing tasks. The storage component is configured to select location for storing the objects and files. The storage component allows storing information referring to a file by referring to a unique identifier referring to the file or the information. The storage component makes scaling easy, as the capacity on a single system behind the software is not required. It also allows the management server to determine a way to back-up data in case of the failure of a machine or network connection. The block storage component enables access to specific locations on a disk drive for accessing files that might be important in scenarios in which data access speed is the most important consideration. The networking capability component ensures that each of the components of the cloud environment deployment can communicate with one another quickly and efficiently.

The dashboard component is the graphical interface to cloud environment. The dashboard component is configured to provide a display of various activities associated with the cloud environment. In addition, the dashboard component allows managing the activities of the cloud environment 200. Identity services component of the cloud environment 200 is a central list of all of the users of the cloud environment, mapped against all of the services provided by the cloud which they have permission to use. It provides multiple means of access, thereby enabling the developers to map existing user access methods against identity services component. Image services component allows images to be used as templates when deploying new virtual machine instances. Herein, "images" may refer to images (or virtual copies) of hard disks. The telemetry services component allows the cloud environment to provide billing services to individual users of the cloud environment. It also keeps a verifiable count of each user's system usage of each of the various components of the cloud environment. For instance, the system usage may include metering and usage reporting. The orchestration component allows storing of the requirements of a cloud application in a file that defines what resources are necessary for that application. In this way, it helps to manage the infrastructure needed for a cloud based training service to run.

The virtual training labs can be accessed through a web portal in a cloud computing environment, where the web portal includes a database and web server. In an example scenario, the web portal may be developed using technologies such as Java as a programming language, MySQL as a Database, Apache as a Web server and tomcat as a middle ware. The web server can be integrated with a plurality of remote servers in the cloud environment using Representational State Transfer (REST) application programming interface (APIs).

Herein, the REST is an abstraction of the architecture of the World Wide Web. In other words, REST is an architectural style consisting of a coordinated set of architectural constraints applied to components, connectors, and data elements, within a distributed hypermedia system. REST ignores the details of component implementation and protocol syntax in order to focus on the roles of components, the constraints upon their interaction with other components, and their interpretation of significant data elements. The following are the features of the REST API. It is a lightweight framework and includes capabilities for service components to expose feature sets via declarative sets. It follows a request-response mechanism, where the requests and responses are in JSON / XML format.

### REST API Integration for Creating a Server Instance

| Method | URI | Description |
|---|---|---|
| POST | /v2/ {tenant_id}/servers | Creates a server. |

The URI is hit with necessary parameters and HTTP method to get appropriate responses.

### REQUEST

The HTTP request must use either a GET or POST or PUT or DELETE method.

**The table below shows the URI parameters for the Create Server:**

| Name | Type | Description |
|---|---|---|
| {tenant_id} | UUID | The tenant ID in a multi-tenancy cloud. |

This operation does not accept a request body

### RESPONSE

Based on the request format (JSON / XML), the POST method hits the URI specified, creates the server and returns a JSON / XML Response
SAMPLE JSON REQUEST BODY (to Create a Server for a virtual training lab)

```
 {
 "server": {
 "name": "server-test-1",
 "imageRef': "b5660a6e-4b46-4be3-9707-6b47221b454f',
 "flavorRef": "2",
 "max_count": 1,
 "min_count": 1,
 "networks": [
 {
 "uuid": "d32019d3-bc6e-4319-9cld-6722fc136a22"
 }
 ],
 "security_groups": [
 {
 "name": "default"
 },
 {
 "name": "another-secgroup-name"
 }
 ]
 }
 }
```

The cloud environment 200 enables a plurality of users to access training modules provisioned by the servers 202a-202e to thereby access the resources pertaining to the training. For instance, users can access the cloud environment through user devices such as devices 252, 254 by sending request for provisioning of virtual training labs. Such request may include an access request generated via the user devices 252, 254 to a computing device (such as a device 110 of FIG. 1), which in particular embodiments may include a module to accept the access request for accessing a particular training module and configure a virtual training lab and an associated computer that includes executable instructions for providing the requested lab to the cloud computing environment 200.

In an example embodiment, the cloud computing environment 200 along with the servers 202a-202e facilitates in configuring cloud machines for automated provisioning of virtual training labs, assessment of virtual training labs dynamically and decommissioning the same on completion of the training course. For instance, the cloud computing environment facilitates in configuring cloud machines incorporating virtual training labs such as virtual training labs 262, 264. The cloud computing environment 200 may further be configured to provision a plurality of modules that may enable provisioning of virtual training labs. For instance, the cloud computing environment may provision a web portal 270 for accessing the cloud computing environment 200 including a registration module 272 to register for a training module, an assessment portal 274 for assessment of the training module, a training content module 276, a task tracking module 278, a report generation module 280, and so on.

In an embodiment, the plurality of training modules may be stored or in some embodiments provisioned by a device, for instance a computing device. For instance, when a user register using the registration module 272 for training on a particular subject matter (or technology), training content and a plurality of tasks pertaining to said subject matter (or technology) are provisioned to the user. The training content is provisioned by the training content module 276. The training content module 276 may access training data (e.g., library and content) pertaining to a plurality of training modules stored in the servers 202a-202e. The training content and the virtual training lab including the plurality of tasks may be accessed via a device, which in particular embodiments may include a device 110 (FIG. 1) that includes a module to accept a request for a training module (e.g., library) and an associated computer that includes executable instructions for provision of training data to the cloud computing environment.

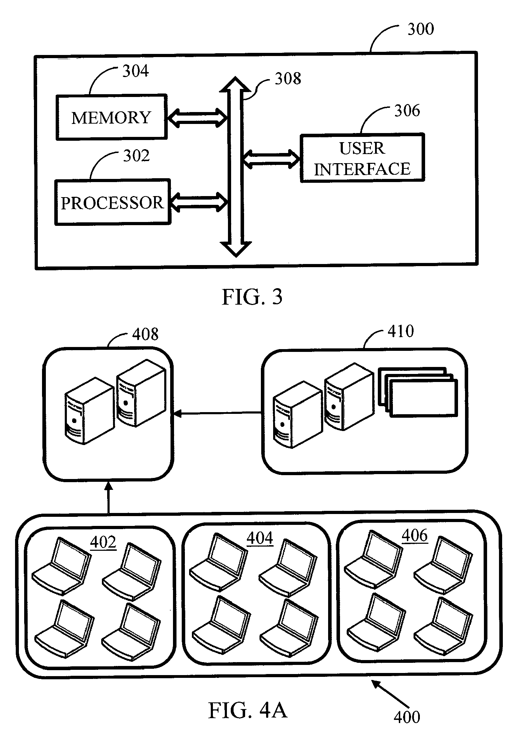

The device is configured to communicate with the cloud computing environment 200 via a suitable communications link. The communication with the cloud computing environment 200 may include communication via a local area network (LAN), a general wide area network (WAN), and/or a public network (e.g., the Internet) via the communications link 282, 284. In particular, the communications link 282, 284 sends access request and, in certain embodiments, authentication information, to the cloud computing environment 200. The authentication information may confirm that the device 252, 254 is a client of the cloud computing environment 200. In an embodiment, the authentication of the device such as the devices 252, 254 may be performed through Lightweight Directory Access Protocol (LDAP) (or corporate LDAP illustrated as 286). An example of a system embodied in the computing device (for example, the device 110 of FIG. 1) for provisioning of the cloud based training is described further with reference to FIG. 3.

FIG. 3 illustrates a system 300 for cloud based learning, according to an embodiment of present disclosure. In an embodiment, the system 300 may be embodied or executed in a computing device, for instance the computing device 110 (FIG. 1). Alternatively, the system 300 may be a distributed system distributed in a plurality of computing devices associated with the cloud computing environment. The system 300 includes or is otherwise in communication with at least one processor such as a processor 302, at least one memory such as a memory 304, and a user interface 306. The processor 302, memory 304, and the user interface 306 may be coupled by a system bus such as a system bus 308 or a similar mechanism.

The processor 302 may include circuitry implementing, among others, audio and logic functions associated with the communication. For example, the processor 202 may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits. The processor 302 thus may also include the functionality to encode messages and/or data or information. The processor 302 may include, among other things, a clock, an arithmetic logic unit (ALU) and logic gates configured to support operation of the processor 302. Further, the processor 302 may include functionality to execute one or more software programs, which may be stored in the memory 304 or otherwise accessible to the processor 302.

The at least one memory such as a memory 304, may store any number of pieces of information, and data, used by the call control server to implement the functions of the call control server. The memory 304 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 304 may be configured to store information, data, applications, instructions or the like for enabling the call control server to carry out various functions in accordance with various example embodiments. Additionally or alternatively, the memory 204 may be configured to store instructions which when executed by the processor 202 causes the call control server to behave in a manner as described in various embodiments.

In an example embodiment, a user interface 306 may be in communication with the processor 302. Examples of the user interface 306 include but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 206 may include, among other devices or elements, any or all of a speaker, a microphone, a display, and a keyboard, touch screen, or the like. In this regard, for example, the processor 302 may comprise user interface circuitry configured to control at least some functions of one or more elements of the user interface 306, such as, for example, a speaker, ringer, microphone, display, and/or the like. The processor 302 and/or user interface circuitry comprising the processor 302 may be configured to control one or more functions of one or more elements of the user interface 306 through computer program instructions, for example, software and/or firmware, stored on a memory, for example, the at least one memory 304, and/or the like, accessible to the processor 302.

In an example embodiment, the processor 302 is configured to, with the content of the memory 304, and optionally with other components described herein, to cause the system 300 to access the virtual training labs over the cloud environment, for instance the cloud environment 200 of FIG. 2. In an embodiment, one or more devices may access the virtual training labs over the cloud environment using an internet gateway. In another embodiment, the one or more devices may access the virtual training labs over an enterprise private cloud or learning datacentre network. Herein, the one or more devices may be assumed to include a client device, such as a mobile phone, a laptop, a personal digital assistant (PDA), a computer, and so on. The device may communicate with the web portal for accessing the virtual training labs.

In an embodiment, the processor 302 is configured to, with the content of the memory 304, and optionally with other components described herein, to cause the system 300 to enable registration for accessing the training modules. For instance, the system 300 may include a registration module for enabling the registration. In an embodiment, upon enabling a user to register for the training, the system 300 may facilitate in authenticating an access to the virtual training labs. For instance, on triggering of a request to access a training lab, the system 300 may be caused to authenticate the request for accessing to the virtual training labs. In an embodiment, the system 300 may include an authentication module to identify credential of the user requesting access of the virtual training labs.

In an embodiment, for authenticating the request to access the virtual training lab, the system 200 is caused to receive an authentication token associated with the request to access the virtual training lab. The system 300 may be caused to fetch images, flavours and networks available in the cloud computing environment and display the same to the trainee. In an embodiment, the fetch images, flavours and networks available in the cloud computing environment may be displayed on a user interface, for instance user interface 306 of the system 300.

In an example embodiment, the processor 302 is configured to, with the content of the memory 304, and optionally with other components described herein, to cause the system 300 to facilitate, at the computing device, a selection of at least one training module from amongst a plurality of training modules. In an embodiment, the term 'training module' may refer to training data pertaining to a technology, course, and other such data. Each training module may include a plurality of designated tasks along with support information for performing the plurality of tasks, such that performing the plurality of designated tasks using the corresponding support information may facilitate in training an individual/trainee on the training module.

The system 300 is further caused to enable the user to select a training module based on the images, flavours and networks displayed on the user interface 306. Upon selection of the training module by the user, the system is caused to generate a request ID corresponding to the training module. In an embodiment, the system 300 is further caused to enable approval of the request. For instance, the request may be displayed as a pending request in the system, and an administrator may authenticate the request based on an availability of resources pertaining to the training module. In another embodiment, the system 300 may be configured to automatically (without user intervention) determine availability of the resources pertaining to the training module, and authenticate the request.

In an embodiment, upon authenticating of the request, at least one virtual training lab pertaining to the training module is configured and provided for training. In an embodiment, the processor 302 is configured to, with the content of the memory 304, and optionally with other components described herein, to cause the system 300 to configure the virtual training lab associated with the training module. In an embodiment, the virtual training lab may refer to a virtual machine that may be initiated upon selection of the training module. The virtual training lab may include virtual CPU, memory, networking, and storage. The storage may comprise one or more virtual disks. The virtual disks may include operating systems, drivers, and application software that run on the virtual machine. In an embodiment, the virtual training lab may be configured based on a template library. The template library may store plurality of templates with different specifications needed for each virtual training lab associated with each technology with multiple levels of training. In an embodiment, the plurality of training modules is accessible from a plurality of remote servers communicably coupled to the computing device in the cloud environment. Examples of the plurality of remote servers include devices such as devices 102, 104, and 106, of FIG. 1.

The virtual training lab (or the virtual machine) includes a first plurality of tasks. On authorizing an access to the virtual training lab, the system 300 is caused to enable execution of the first plurality of tasks associated with the at least one virtual training lab. For instance, the virtual machines may be configured to perform functions pertaining to training on a technology.

In an embodiment, during execution of instructions, a trainee may enter instructions in a user interface of the virtual machine. In an example embodiment, the processor 302 is configured to, with the content of the memory 304, and optionally with other components described herein, to cause the system 300 to track the inputs provided by the trainee. For instance, the system 300 is caused to track, in real-time, a metadata generated during the execution of the first plurality of tasks. In an embodiment, the metadata associated with a task from amongst the first plurality of tasks includes at least one of time taken to complete the task, key-strokes entered, and logical sequencing followed for executing the task. Additionally, the processor 302 is configured to, with the content of the memory 304, and optionally with other components described herein, to cause the system 300 to track the attempts being made by the trainee for execution of the first plurality of tasks.

In an embodiment, the processor 302 is configured to, with the content of the memory 304, and optionally with other components described herein, to cause the system 300 to allow a threshold number of attempts to enable the execution of the at least one task. For instance, the system 300 may allow three attempts for executing a task pertaining to the virtual training lab. In case, the trainee exhausts all the threshold number (or allowable number) of attempts to provide response for the tasks, and still not provide the correct response, the system 300 may be caused to automatically provide a response for the execution of the at least one task.

In an embodiment, the processor 302 is configured to, with the content of the memory 304, and optionally with other components described herein, to cause the system 300 to analyze the metadata for determining a learning progress associated with a learning of the training module. For instance, the system 300 analyzes the keystrokes made or in other words it verifies and acts as a feedback mechanism to understand the mistakes committed by the user while providing responses to the first plurality of tasks.

In an embodiment, the processor 302 is configured to, with the content of the memory 304, and optionally with other components described herein, to cause the system 300 to configure at least one assessment lab corresponding to the at least one virtual training lab, for a performance evaluation of the learning of the at least one training module. An example of the assessment lab may include the assessment lab 288 (FIG. 2). In an embodiment, the at least one assessment lab is configured by accessing at least one remote server from amongst the plurality of remote servers. In an embodiment, the assessment lab may refer to a virtual machine that may be initiated upon selection of the training module. The assessment lab may include virtual CPU, memory, networking, and storage. The storage may comprise one or more virtual disks. The virtual disks may include operating systems, drivers, and application software that run on the virtual machine. The assessment lab (or the virtual machine) may include a second plurality of tasks.

In an embodiment, the execution of the second plurality of tasks associated with the at least one assessment lab results in generation of log files associated with the execution. For instance, during execution of the second plurality of tasks by the trainee, the system 300 may be cause to track, in real-time, the log files generated during the execution of the second plurality of tasks. Herein, a log file may refer to a file that records either events that occur in an operating system like windows or Linux, set of commands and activities that occurred in software application servers like Web or Database and messages between different users of a communication software. Multiple log files are created and stored for analysis to dissect any issues related to errors, failure, performance, security or security, Audits. In an embodiment, the log files may record a sequence of commands entered by the trainee while performing the first plurality of tasks. The sequence of commands entered by the trainee can be analyzed to infer logical reasoning employed by the trainee. In an embodiment, the system 300 is caused to analyze the log files for assessment of the learning of the at least one training module. In an embodiment, the analysis of metadata (or log analysis) is achieved in Big data / Hadoop platform.

FIG. 4A illustrates an example system architecture 400 for analysis of metadata associated with performing of tasks in cloud based environment, in accordance with an example embodiment. The training includes automatic provisioning of virtual training labs and/or assessment labs pertaining to one or more of a plurality of training modules. For instance, the training modules can be associated with technologies such as Linux, windows, and so on. The trainees may be expected to complete the training and post training completing, the trainees may be expected to undergo assessment by accessing assessment labs. For instance, the trainees may access the assessment labs such as such as assessment labs 402, 404, 406. An example illustrating a training scenario and assessment of the training is described further with reference to tables (Table 1 and Table 2) below

In an embodiment, a trainee may undergo an assessment. An example illustrating a training scenario, and various processes involved for the assessment (for instance in the assessment mode) of the training pertaining to said training scenario is mentioned in the table (Table 1) below:

**Table 1**

| Theme | Definition of Theme | Example | Objective |
|---|---|---|---|
| Scenario | A sequence of events contributes to an outcome. | Attach Printer | Attaching a printer with the operating system for printing |
| Task | A function to be performed | • Contact the Print server IP address. | List of events involved in attaching the printer. |
| | | • View the list of printers available. | |
| | | • Connect to the appropriate printer. | |
| | | • Verify the Printer Driver has been installed. | |
| | | • View the Print Queue. Print Queue - A list of printer output jobs held in a reserved memory area. | |
| | | • Managing the Print Jobs. | |

The scenario mentioned in Table 1 pertains to Attaching a printer. The objective of the scenario is to attach a printer with the operating system for printing. A task for accomplishing said scenario may include a plurality of functions or events that may be involved in attaching the printer. Examples of such functions are provided in the table 1. For instance, such functions may include contact the print server IP address, view the list of printer, connect to appropriate printer, Verify the Printer Driver has been installed, View the Print Queue where, Print Queue - A list of printer output jobs held in a reserved memory area, managing the print jobs, and so on.

The trainees can access Linux/Windows operating system in the assessment labs 402, 404, 406. In an embodiment, a scheduler may be running in each of the assessment labs 402, 404, 406. The scheduler can send logs from each system of the training labs 402, 404, 406 to a server, for instance a server 408 while the trainees practice the scenarios/tasks included in the training labs as final assessment. In an embodiment, the server 408 can store metadata in log files associated with the tasks performed by the trainees.In an embodiment, metadata generated during performing of tasks can be analysed by a system (for instance the system 300 of FIG. 3) embodied in a server 410. In an example embodiment, the system embodied in the server 410 may include a log-analysis module for analysis of the log-files generated during performing of the tasks. Herein, a log-file may refer to a file that records events that occur in an operating system like windows or Linux, set of commands and activities that occurred in software application servers like Web or Database and messages between different users of communication software. Multiple log files are created and stored for analysis to dissect any issues related to errors, failure, performance, security or security, Audits. The data generated in the log files is huge and manual analysis of the data can be a complex process. The analysis of the data requires special software for analysing the logs because logs are large, tedious and are difficult to understand for a system administrator. The logs are critical input to be understood well to tune the server 410 for better performance. In addition, time stamping of the records in the log-file is of vital importance. In certain applications, historic logs may be needed to meet security compliance. The log-analysis module may facilitate in analysing different categories of log reports from a heterogeneous server environment without or minimal manual inputs. The log files may be analyzed, and the assessment modules completed by the trainees may be displayed, for instance as displayed in the following manner in Table 2:

**Table 2**

| Evaluation Parameters | Definition of Parameter | Weightage | Maximum Score |
|---|---|---|---|
| Logical Sequencing | The sequence of tasks that has to be completed by trainees in order to find a solution for the scenario. If a trainee skips a task, it is also captured by the Task Tracker. | 30% | 30 |
| Time Taken | Time taken is the amount of time consumed by a trainee in completing the scenario. | 10% | 10 |
| Completion | The number of tasks completed in finding the solution for the scenario. | 50% | 50 |
| Number of Attempts | The number of times the trainee has attempted the scenario. | 10% | 10 |

Referring to Table 2, various evaluation parameters are displayed that may be utilized by the system for performing assessment analysis of the trainee or the user. For instance, the assessment parameters may include Logical Sequencing, Time Taken, number of tasks completed, number of attempts, and so on. The system may also facilitate in providing a weightage being given to each of the evaluation parameters, and a score that the said trainee or use may receive upon completion of the task.

In an embodiment, the log analysis of the second plurality of tasks may be performed in real-time. In another embodiment, the log analysis of the second plurality of tasks may be performed on a scheduled basis. In an embodiment, the log analysis module can perform analysis of the second plurality of tasks by using Big Data Analytics in Hadoop environment. In particular, the server 410 is configured to track each and every activity performed by a user on the system (for instance, a system including one of the training labs 402, 404, 406) that is allocated to the user. The server 410 may utilize log analysis and a key-logging mechanism to monitor and measure the progress of a user accessing the system for training and learning purpose.

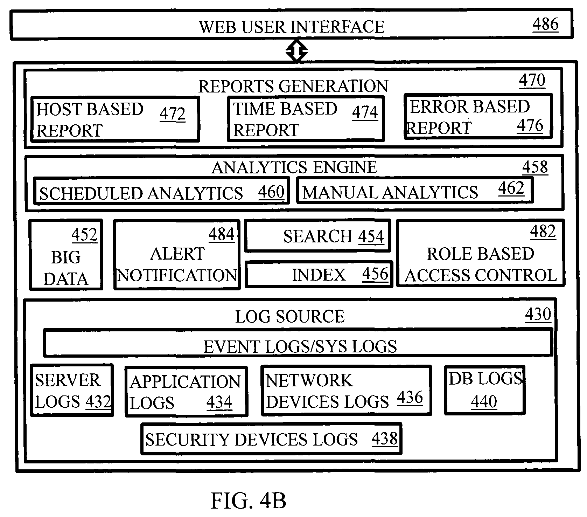

In an embodiment, the server 410 can send the request to the server 408, which has the log files received from all the training users' systems. In response, the server 408 can send the log files received from all the training users' systems to the server 410. The log-analysis module in the server 410 analyses the log files and displays the training modules completed by the trainees. In an example embodiment, the log-analysis module can make a request for accessing the log files upon being requested by a user, for instance an administrator. For instance, the administrator may search for the trainee based on trainee's credentials (such as an ID), based on which the server 410 can send the request for accessing the log files pertaining to the trainee to the server 408. The server 408 can send the requested log files to the server 410, and the server can analyse the log files having he metadata generated during performing of the tasks by the trainee. For instance, the sever 410 can analyse the keystrokes made/entered by the trainee or in other words it verifies and acts as a feedback mechanism to understand the mistakes committed and infer logical reasoning employed by the trainee. The server 410 is also configured to analyse the metadata based on the time taken by the trainee in performing specific tasks, logical sequencing of commands entered by the trainee while performing the tasks, and perfection achieved. In an embodiment, the analysis of the metadata associated generated during performing of the tasks can be presented on a UI, for instance the UI 306 of the system 300. An example architecture of the UI for presenting analysis of the tasks is further described with reference to FIG 4B.

FIG. 4B illustrates a system architecture 420 for analysis of the metadata associated with performing of tasks, in accordance with an example embodiment. The system architecture may represent a web based tool having agent-less architecture that uses built-in server (for instance, the server 408 of FIG. 4A) to store the log files obtained from the trainee devices. The architecture 420 is shown to include a log source component 430, a big data component 452, a search component 454 and an index component 456, an analytics/reports engine 458 including a manual analytics component 460 and a schedule analytics component 462, report generation component 470 including, a role based access controls component 482, an alert notification component 484, and web portal UI component 486. The log source component 430 is responsible for generation of log files. Examples of log files includes server logs 432, application logs 434, network device logs 436, storage device logs, security devices logs 438, database logs 440, firewall, routers, switches and any such logs that may be utilized for analysis by the server 408. The log source component 430 may be embodied in a device or a software application. In an embodiment, the log-files associated with the tasks can be collected, either in real-time or after every scheduled time period, from different servers as specified by the administrator.

The log-files collectively include large and complex data set, for instance an unstructured data that are difficult to analyse. Such data may be termed as 'Big Data' and may be stored in the Big data component 452. The system performs log analysis and task tracking in a big data environment in order to manage the data and further analyse the data generated pertaining to key logging (or key tracking) and log information for multiple users. The collected log files are indexed in a file, and the indexed file may be stored as a separate file. After indexing, the original log files may be deleted which are collected and only the indexed file is stored, thereby helps network administrators to analyse system problems, improve network security, and reduce downtime of servers, workstations, domain controllers, switches, and routers of enterprise networks.

The search component 454 facilitates in identifying the training status for each user or trainee. The search component is configured to search and identify items in a structured unstructured data. The index component 456 scans the complete dataset (including structured and unstructured) and builds a list of search terms, thereby improving the performance while identifying the training status for each user or trainee.

The analytics engine 458 is configured to analyse data generated pertaining to tasks performed by the users during learning as well as assessment of the tasks, generates report for the users or trainees. For instance, the analytics engine 458 may analyse the data associated with key tracking and log details. The analysis of the data may be performed in a scheduled manner, for instance by a schedule analytics component 460. In an embodiment, a scheduled analysis of the activities performed by the trainee on the server may be utilized for generating reports. Additionally or alternatively, the reports may be generated on a data that is manually uploaded. For instance, the manual analytics component 462 may enable manual uploading of the log files and/or key tracking details of training lab server to perform analytics.

The report generation component 470 is configured to generate reports based on different parameters. The report generation component 470 may generate reports host based report 472, time based reports 474, error based reports 476, and so on. For instance, the reports generation component 470 can generate reports based on, the trainee/user, lab servers, training schedule, and so on.

The role based access control component 482 is responsible for restricting system access to specific modules / components based on the role for authorized users. The role based access control component 482 may further enable associates to nominate themselves for given list of training modules based on their role.

The alert notification component 484 is responsible for sending a training status notification to the training coordinator or administrator. The alert notification component # may enable a machine-to-person communication on occurrence of defined event or situation.

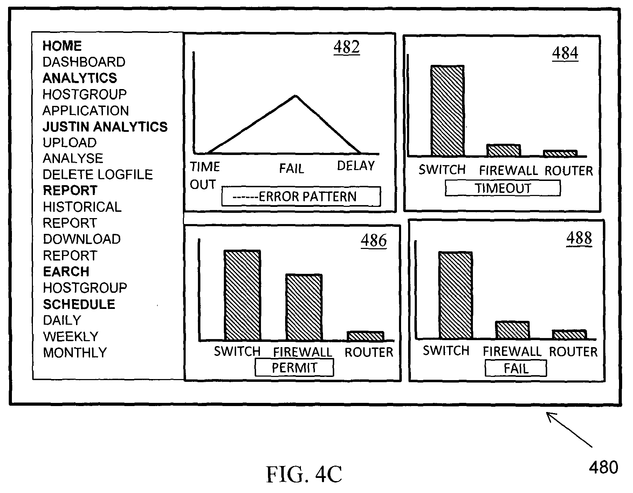

The web UI component 486 is a front-end for the plurality of components of the system, and enables users to interact with the said components (application or tool) of the system. The web UI component 486 enables corporate users to login to initiate manual analytics on any data. An example report being displayed on the web UI is presented in FIG. 4C

Referring to FIG. 4C, a report 480 being generated on a UI for task scenarios is presented. The report 480 is shown to include top occurred error patterns 482, top servers having errors such as timeouts 484, permitted 486 and failed 488. In various embodiments, the UI may enables to group data-center components in a host-group as per requirements. Analytics can be performed on individual servers or on selected host-group. Scheduled Analytics analyzes the selected servers for predefined error strings and generates report periodically. In certain scenarios, the administrator can also select any host or host-group to perform a manual analytics for a required error string. Additionally, just in time analytics enables one to upload the log file and perform analytics as well. In an embodiment, the UI can display all the historical reports report of respective hosts or hostgroups which can collected on scheduled analytics. The reports can be named according to the time and date and thus the user can download the report according to the requirement.

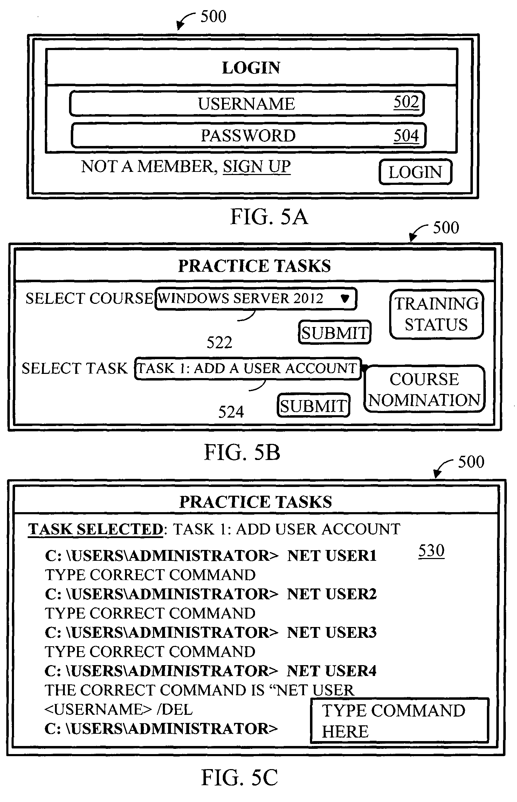

FIGS. 5A - 5F illustrates an example UI 500 associated with learning in cloud-based training environment, in accordance with an example scenario. Referring to FIG. 5A, the UI 500 is shown to include a window for enabling a user (for instance, a trainee) to log-in using credentials thereof. For instance, the user may provide a username and a password in fields such as fields marked as 502, 504 respectively on the UI 500 to log-into a web portal for accessing the training labs.

The user can select the nominated courses, view all the scenarios that may be defined for completing the training of the course, select each scenario to practice the same, and perform various other functions for completing the training of the course. For instance, as illustrated in FIG. 5B, the UI 500 may provide a 'Select course' field 522 and a 'Select task' field 524 for enabling the user to select the training of a choice. On selection of a course (for instance, a course of Windows sever 2012) and a task (for instance, Task 1: Add a user account) pertaining to the course, the system, for instance the system 200 (FIG. 2)

In accordance with various embodiments disclosed herein, while the user is practicing the task in learning mode, the system can assist the user in learning fast by displaying a correct syntax of commands in case the system detects that the user is trying wrong command or the syntax for a predefined number of times. For instance, as illustrated in FIG. 5C, the UI 500 presents a window 530 where the commands typed by the user are displayed. Herein, the user may type command specific to a task, for instance task 1: Add a user account in a course (for instance, a course of Windows sever 2012). As illustrated herein, the user has typed incorrect command for performing the task, a defined number of times (for example, three times). The system may detect the incorrect command being provided three times in a row, and in response the system may automatically provide a suggestion on inputting the command. For instance, the system may provide the command, or in some instances, a hint for correcting the incorrect command.

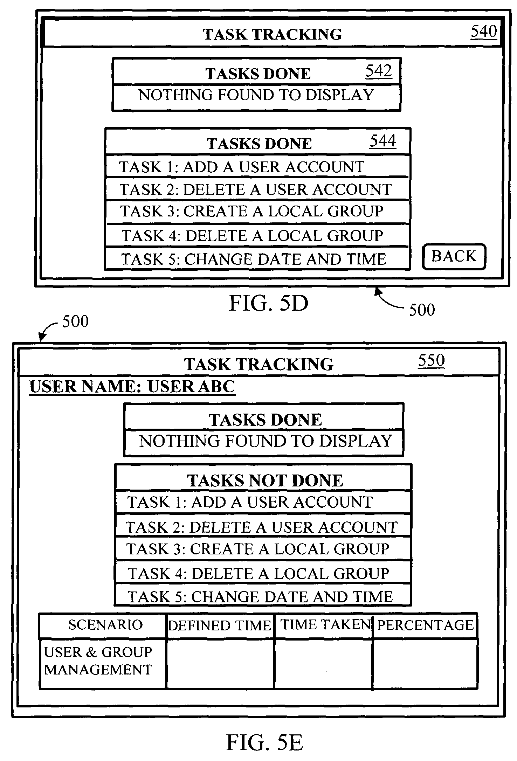

The system may facilitate in providing a dashboard to a user, where the user can view the status of trainings at any time by looking at the list of completed tasks as well as a list of tasks to be completed. For instance, referring to FIG. 5D, a task tracking window 540 is displayed on the UI 500. The task tracking window 540 is shown to include sub-windows 542, 544 displaying the 'Tasks done" and another sub-window for "Tasks not done" respectively, pertaining to the course, by the user. For instance, herein, the task performed by user are shown to be nil, while the tasks to be performed as shown to include a plurality of tasks such as tasks 1-5.

In an embodiment, the system may facilitate in tracking of tasks performed by one or more users. For instance, the system may facilitate a user in displaying the tasks pertaining to various courses, the details of Training / Assessment Lab server assigned for each trainee, a list of nominated users for each of the training courses, and so on. For instance referring to FIG. 5E, an admin may log-in to a web portal to access the system, and the UI 500 of the web portal may include a window 550 that displays "Tasks done", "Tasks not done", "Scenario", Time defined to complete the scenario", "Actual time taken to complete the scenario", percentage and so on.

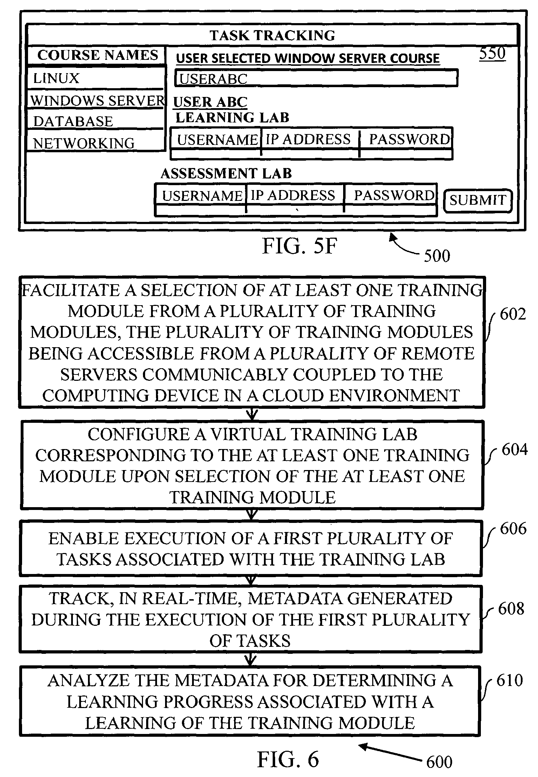

As disclosed previously, the system may facilitate in assessing the user's progress in an assessment mode. In the assessment mode, the system is configured to assess the efficiency of the user by tracking a number of tasks completed at any point in time and time taken for completing each scenario against a defined timeline. For instance, the system may configure an assessment lab (as illustrated in FIG. 5F), corresponding to a training course for which the user has completed the learning using the learning lab. The system may present the assessment lab to the user so as to enable the user to take assessment tasks defined in the assessment lab. In addition to the assessment tasks, the assessment lab also includes a predefined time corresponding to each task during which the task is expected to be completed. The system is caused to track the time taken by the user to complete the tasks in the assessment lab, and based on the time taken, the system is caused to generate an assessment report for the user. The assessment report may include a score in percentage including the time taken by the user to complete each scenario given in assessment lab.

FIG 6 is a flow diagram depicting an example method 600 for learning in a cloud-based environment, in accordance with an example embodiment. The method 600 depicted in the flow chart may be executed by a system, for example, the system 300 of FIG. 3. In an example embodiment, the system 300 may be embodied in a computing device, for example, the computing device 110 (FIG. 1). Herein reference will be made to FIGS. 1 through 5E where various embodiments of provisioning of the cloud based training are explained in detail.

At 602, a selection of at least one training module from a plurality of training modules is facilitated at a computing device in a cloud environment. Herein, the cloud environment may contain one cloud configuration, or several cloud configurations that collectively provide training cloud environment configuration. Each individual cloud configurations may be a "private" cloud (e.g., the operator of may be a related entity to the cloud provider, and access to the cloud provider may not be generally accessible to outside entities) or a "public" cloud (e.g., the cloud provider may be generally accessible to some outside entities).

In an embodiment, the plurality of training modules are accessible from a plurality of remote servers communicably coupled to the computing device in a cloud environment. An example of the cloud environment and communicable coupling of the plurality of remote servers with the computing device, are explained in detail with reference to FIGS. 1 and 2. In an embodiment, the plurality of remote servers allows for sharing and distributed processing of computing resources to be allocated for particular training modules or trainees within the cloud computing environment. Such an implementation may allow trainees to access information and an advanced data processing platform on a scale that may otherwise be exclusive or shared among multiple users at one time. Alternatively or additionally, such an implementation can provide a convenient venue or portal for provisioning of training without limitation of time. The cloud computing environment may also facilitate a virtual plug and play interaction for provisioning of the training and assessment using data analysis platforms. That is, provisioning of the training labs in the cloud computing environment is relatively seamless and may be implemented without a great deal of IT support.

At 604, a training lab corresponding to the at least one training module is configured. The at least one training module is accessible by at least one remote server from amongst the plurality of remote servers. In an embodiment, the training lab includes a first plurality of tasks. At 606, execution of the first plurality of tasks associated with the at least one training lab is enabled. For instance, a trainee may execute the plurality of tasks related to the training lab. In an embodiment, a trainee may be enabled to make a threshold number of attempts to process a task. On exceeding a threshold number of attempts, automatically a response may be provisioned for the execution of the at least one task.

At 608, a metadata generated during the execution of the first plurality of tasks is tracked in real-time. In an embodiment, the metadata associated with a task from amongst the first plurality of tasks includes at least one of time taken to complete the task, key-strokes entered, and logical sequencing followed for executing the task. For instance, a number of attempts made by a trainee to enable a task may be tracked in real-time.

At 610, the metadata is analyzed in real-time for determining a learning progress associated with a learning of the training module. In an embodiment, the metadata may be analyzed by analysis of log files generated during execution of the tasks. An example of log analysis of the meta data is described in detail with reference to FIGS. 4A-4C.

In an example embodiment, on the execution of the first plurality of tasks, at least one assessment lab corresponding to the at least one training lab may be configured. The assessment lab facilitates in performance evaluation of the learning of the at least one training module. In an embodiment, the at least one assessment lab may include a second plurality of tasks. In an embodiment, the at least one assessment module may be configured by accessing at least one remote server from amongst the plurality of remote servers, and execution of the second plurality of tasks associated with the at least one assessment lab is enabled. In an embodiment, the execution of the second plurality of tasks results in generation of log files associated with the execution. The execution of the second plurality of tasks may be tracked in real-time; and analyzed log files generated during execution of the tasks may be analysed for assessment of the learning of the at least one training module.

Operations of the flowchart, and combinations of operation in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 500 are described with help of system 300. However, the operations of the method 500 can be described and/or practiced by using any other system.

### Summarized scenario

A trainee can access a training module in real-time in a cloud computing environment using a system. The system may include a set of server dedicated for accomplishing various vital functions related to registration of the trainee for accessing training modules, access to tasks pertaining to specific training modules, tracking of the tasks being performed by the trainee, access to assessment scenarios/labs for assessment of the training performed, and a reporting dashboard for presenting real-time reports pertaining to assessment of the training.

The trainee can register for accessing the training modules. For instance, the trainee can access a registration module integrated with a corporate LDAP or an active directory for registering to the training modules. Hence it enables a trainee who is an employee of an organization to login to the system with the existing domain credentials. On successful authentication, the system takes the trainee to the registration module wherein the trainee may get nominated for a particular training module. Nominated trainees can be granted access to the training modules as well as to the training lab for a specific period of time.

The training modules can be present in a central repository server. The training modules may include learning content associated with the training. The trainee can go through the training modules for understanding of the training content. At the same time, the trainee can access the training labs having specification associated with the training modules for practising the training content. An advantage of various embodiments disclosed herein is that the training labs are configured dynamically for enabling the trainees to practise the training content by performing a plurality of tasks associated with the training module. The training labs can be configured by integration of a self-service cloud portal (enabled by the hypervisor management layer 204 of FIG. 2 or the server 114 of FIG. 1) and a set of remote servers in a cloud based environment. Herein, in case the system is built on a fully automated enterprise training cloud datacentre, multiple training labs with customized specifications for each of the training labs can be spawned quickly and simultaneously, without human intervention.

In an embodiment, on accessing a training lab (or an assessment lab), the trainee may be prompted to perform the plurality of tasks and the system monitors the progress of the trainee based on the metadata generated during performing of the tasks (including the key-logging) while performing the task. In addition, the system includes log analysis module for ensuring that the trainee has practiced all the modules in training modules. Once the trainee has completed all the tasks of the training module, the training labs can be decommissioned automatically for effective utilization of resources in the cloud computing environment. In addition, the trainee can be given access to an assessment lab associated with the training lab. In an embodiment, the system may include an assessment portal for accessing the assessment lab. Alternatively, the system may include an assessment lab integrated with the training lab, such that upon completion of the tasks in the training lab, the assessment lab is dynamically enabled and presented for the purpose of assessment. The assessment lab includes a second plurality of tasks to be performed by the trainee for assessing the learning progress of the trainee. The assessment portal can be enabled with automatic evaluation/assessment of the trainee, and it generates training assessment reports on successful completion of the second plurality of tasks by the trainee. The training assessment reports can be published on a dashboard associated with the system.

The disclosed methods and systems for provisioning of cloud based training and assessment ensures success in terms of training and business preparedness for fresh graduates who join an organization. The cloud based training disclosed herein is positioned to enable users to gain necessary technology and soft skills demanded by the business or organization in a convenient manner since the training modules can be accessed anywhere anytime and by means of any electronic device capable of accessing the Internet. The system disclosed herein enables the trainees (for instance, fresh graduates) to undergo a registration process to access learning material through the system. Subsequent to learning the concepts in a designated technology, a training lab having a plurality of tasks pertaining to the designated technology, may be configured. The trainee may access the training lab and perform the plurality of tasks, and simultaneously, a tracking mechanism (or task tracking module) associated with the disclosed system may monitor the tasks performed by the trainee. On completion of tasks the trainee may be provided with the assessment labs pertaining to the technology, where the trainee is presented with another set of tasks pertaining to the designated technology. The tasks performed by the trainee pertaining to the assessment lab are tracked on various parameters such as time taken to complete a task (vis-a-vis) a predefined time for completing the task, the key strokes, logical sequencing followed, and so on, to assess the trainee's learning. The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The foregoing description of the specific implementations and embodiments will so fully reveal the general nature of the implementations and embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A computer-implemented method for cloud-based learning, the method comprising:
facilitating, at a computing device, a selection of at least one training module from a plurality of training modules, the plurality of training modules being accessible from a plurality of remote servers communicably coupled to the computing device in a cloud environment;
configuring, at the computing device, a virtual training lab corresponding to the at least one training module upon selection of the at least one training module from the plurality of training modules;
enabling, at the computing device, execution of a first plurality of tasks associated with the training lab;
tracking, in real-time, metadata generated during the execution of the first plurality of tasks at the computing device, wherein the metadata associated with a task of the first plurality of tasks comprises at least one of a time taken to complete the task, key-strokes entered and logical sequencing followed for executing the task; and
analyzing the metadata for determining a learning progress associated with learning of the at least one training module.

2. A method according to claim 1, further comprising authorizing a user access for facilitating selection of the at least one module.

3. A method according to claim 1, further comprising:
allowing a threshold number of attempts to enable the execution of the at least one task; and
provisioning, automatically, a response for the execution of the at least one task on determination of a number of attempts exceeding the threshold number of attempts.

4. A method according to claim 1, further comprising, on the execution of the first plurality of tasks, configuring at least one assessment lab corresponding to the at least one training lab, for a performance evaluation of the learning of the at least one training module, the at least one assessment module being configured by accessing at least one remote server from amongst the plurality of remote servers, the at least one assessment lab comprising a second plurality of tasks.

5. A method according to claim 4, further comprising:
enabling the execution of the second plurality of tasks associated with the at least one assessment lab, wherein the execution of the second plurality of tasks results in generation of log files associated with the execution;
tracking, in real-time, the log files generated during the execution of the second plurality of tasks; and
analyzing the log files for assessment of the learning of the at least one training module.

6. A computer implemented system (300) executed by a computing device for cloud-based learning, the system comprising:
at least one memory (304); and
at least one processor (302), the at least one memory (304) coupled to the at least one processor (302) wherein the at least one processor (302) is capable of executing programmed instructions stored in the at least one memory (304) to:
facilitate a selection of at least one training module from a plurality of training modules, the plurality of training modules being accessible from a plurality of remote servers communicably coupled to the computing device (110) in a cloud environment;
configure, at the computing device (110), a virtual training lab corresponding to the at least one training module upon selection of the at least one training module from the plurality of training modules;
enable, at the computing device (110), execution of a first plurality of tasks associated with the training lab;
track, in real-time, metadata generated during the execution of the first plurality of tasks at the computing device (110), wherein the metadata associated with a task of the first plurality of tasks comprises at least one of a time taken to complete the task, key-strokes entered, and logical sequencing followed for executing the task; and
analyze the metadata for determining a learning progress associated with learning of the at least one training module.

7. A system according to claim 6, wherein the at least one processor (302) is further configured by the instructions to authorize a user access for facilitating selection of the at least one module.

8. A system according to claim 6, wherein the at least one processor (302) is further configured by the instructions to:
allow a threshold number of attempts to enable the execution of the at least one task; and
provision, automatically, a response for the execution of the at least one task on determination of a number of attempts exceeding the threshold number of attempts.

9. A system according to claim 6, wherein, on the execution of the first plurality of tasks, wherein the at least one processor (302) is further configured by the instructions to configure at least one assessment lab corresponding to the at least one training lab, for a performance evaluation of the learning of the at least one training module, the at least one assessment module being configured by accessing at least one remote server from amongst the plurality of remote servers, the at least one assessment lab comprising a second plurality of tasks.

10. A system according to claim 9, wherein the at least one processor (302) is further configured by the instructions to:
enable the execution of the second plurality of tasks associated with the at least one assessment lab, wherein the execution of the second plurality of tasks results in generation of log files associated with the execution;
track, in real-time, the log files generated during the execution of the second plurality of tasks; and
analyze the log files for assessment of the learning of the at least one training module.
